# EUROPEAN PATENT APPLICATION

(11) **EP 2 770 121 A1**
(43) Date of publication of application: **27.08.2014**
(21) Application number: 14275031.4
(22) Date of filing: 25.02.2014
(51) Int. Cl.: E03B 7/07, G01F 15/18

(54) **Fluid manifold for water meter**

(30) Priority: 26.02.2013 GB 201303367
(71) Applicant: Atlantic Plastics Limited, Birmingham B46 1AB (GB)
(72) Inventor: James, Gary, Birmingham, B46 1AB (GB); Kemp, Neil, Birmingham, B46 1AB (GB); James, David, Swansea, SA2 8PP (GB)
(74) Representative: Richardson, Lyndsey Ann

(57) **Abstract**

A manifold (1) having a housing (2) including an inlet pipe connector (6) and an outlet pipe connector (7) between which is disposed in fluid communication therebetween a pair of concentric tubes (10,11), one connected at a first end to the inlet pipe connector (6) and the other connected at a first end to the outlet pipe connector (7), the second end of the concentric tubes being connected together in a housing (3) to permit fluid to flow from the inlet pipe connector (6) to the outlet pipe connector (7), and valve (12) means to selectively shut-off or reduce the flow of fluid from the inlet pipe to the outlet pipe.

## Description

This invention relates to fluid manifolds typically, but not exclusively, for connection between water pipes, where the manifold includes a shut-off valve and, optionally, a flow meter measuring both the rate of flow and/or the accumulated flow over time.

Where such a manifold is used in water distribution systems of the type shown in our Patent EP1422353B it is typically contained within a closable boundary box and comprises an upright water inlet pipe having at its upper end a shut-off valve, and an upright water outlet pipe, between which inlet and outlet pipes is a horizontally disposed water meter and associated transfer piping allowing water from the inlet pipe to flow through the water meter and out through the outlet pipe. This general arrangement has a number of disadvantages, one of which being that the presence of the shut-off valve, which limits the space available for the water meter or, put another way, the diameter of the boundary box has to be sufficient for accommodating the inlet pipe and associated shut-off valve, the outlet pipe, the water meter and associated water transfer piping. In addition, where the boundary box is situated above a mains water supply it will be apparent that the flow of water is impeded by frictional resistance against the walls of the piping at every change of water direction, which includes at least four 90° bends. In addition, such an arrangement is relatively complicated, involving a number of connectors, fittings and seals, each representing potential points of failure and complexity of manufacture, as well as relatively high costs in view of the number of components involved, typically well over forty.

The present invention is derived from the realisation that there is a need for a manifold of simpler construction with fewer parts and where the foregoing various disadvantages are obviated.

According to the invention there is provided a manifold having a housing including an inlet pipe connector and an outlet pipe connector between which is disposed in fluid communication therebetween a pair of concentric tubes, one connected at a first end to the inlet pipe connector and the other connected at a first end to the outlet pipe connector, the second end of the concentric tubes being connected together in a housing to permit fluid to flow from the inlet pipe to the outlet pipe, and valve means to selectively shut-off or reduce the flow of fluid from the inlet pipe to the outlet pipe.

Conveniently, the valve means comprises an apertured annular collar and associated stop member, one for the or each aperture, the collar being rotatable between open and closed positions for controlling the flow of fluid, which rotation may be directly via movement of an externally disposed lever, or indirectly via an internally disposed gear mechanism, such as a bevel gear mechanism.

The invention will now be described, by way of example only, with reference to the accompanying drawings in which,
Figures 1, 2 and 3 are respective top, end and (part sectioned) side views of a manifold according to the invention,
   and
Figure 4 is a perspective, part-cutout, view of the manifold of Figures 1-3 shown connected at one end to a water pipe.

In the drawings, a manifold shown generally at 1 comprises a lower housing 2 and a generally tubular upper housing 3 between each of which is disposed a pair of oppositely disposed levers 4 partially rotatable about the major axis of the upper housing 3 within a slot 5 for opening or closing the manifold in a manner to be described.

The lower end of the lower housing 2 includes a water inlet pipe connector 6 and a water outlet pipe connector 7 by each of which water pipes 8 (only one of which is shown) may be connected as part of a water delivery installation. A ground support bar 9 forms part of the lower end of the lower housing 2 for supporting, in use, the manifold 1 and associated piping 8.

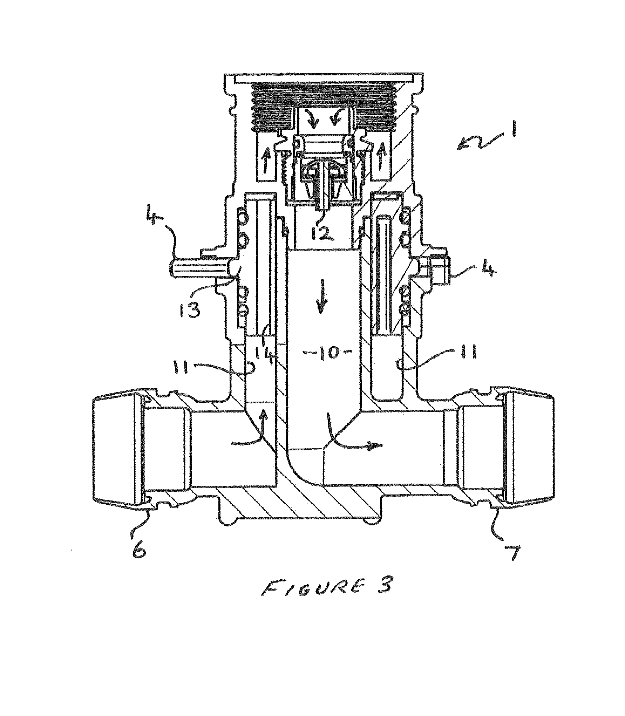

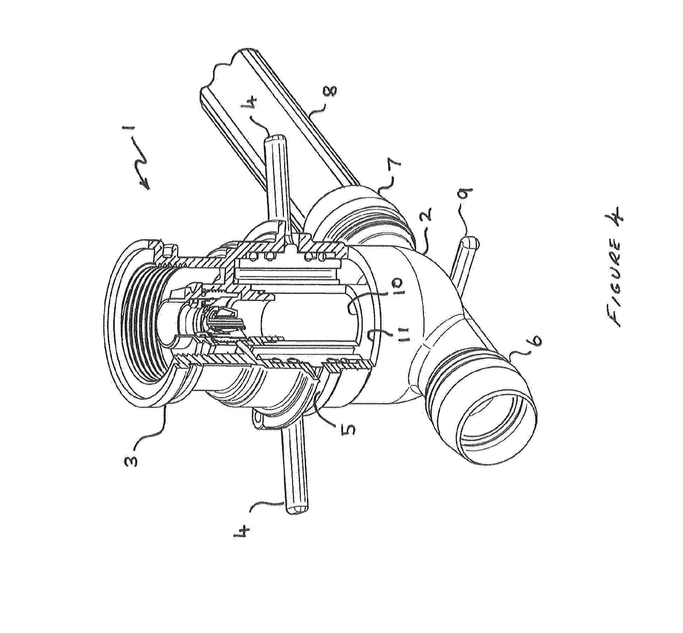

As can be seen more clearly with reference to Figure 4, the inside of the manifold 1 is comprised of a pair of concentric tubes 10, 11, inner concentric tube 10, being hydraulically connected to the water outlet pipe connector 7 and the outer concentric tube 11 being hydraulically connected to the water inlet connector 6 in the manner as shown in Figure 3. The inner concentric tube 10 is closed off by a one way demand valve 12 permitting water, in use, to flow from the outer concentric tube 11 to the inner concentric tube 10 in the direction shown arrowed and out of the manifold via the outlet pipe connector 7 and associated pipe 8.

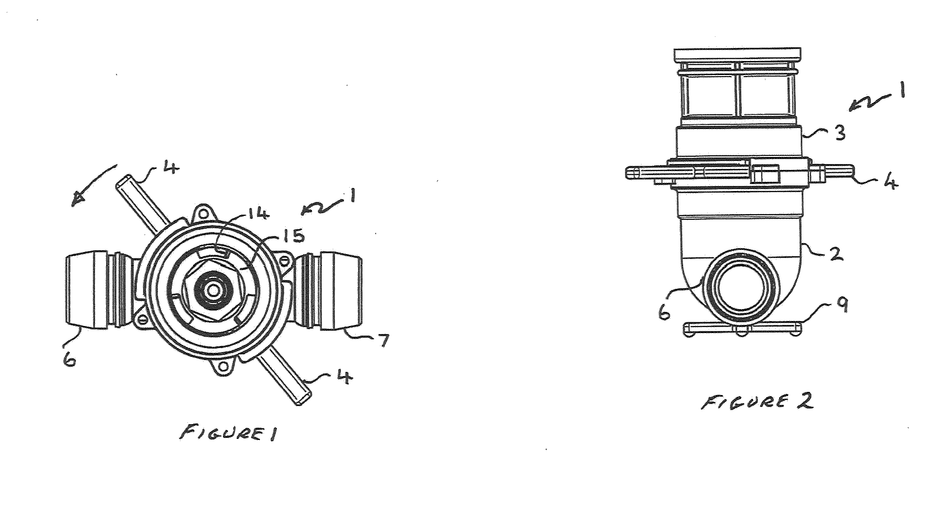

The pair of oppositely disposed levers 4 are mounted on a rotatable annular collar 13 having three apertures 14 therein which are each part-annular in shape which, in the open position shown in Figure 1 register with correspondingly shaped openings in a fixed baffle plate 15 which may be closed to prevent or inhibit flow of water through the ducts upon partial rotation of the levers 4 in the direction shown arrowed in Figure 1.

In use, the top of the manifold 1 is closed by a threaded fitting such as a closure cap (not shown) or a water meter (not shown) so that when water flows from the outer tube 11 through the one way valve 12 to the inner tube 10 it can thereafter exit via the water outlet pipe connector 7 and associated water pipe 8. The flow of water can be adjusted by partial or complete rotation of the collar 13 up to the limit imposed by the length of the slots 5 between the lower housing 2 and upper housing 3 of the manifold 1, although it would be understood that the invention is not limited to such an arrangement and other types of shut-off mechanisms or valves may be used including, for example, an internally disposed ball valve operated indirectly via a gear mechanism, such as a bevel gear mechanism accessible from the outside of the pipe connector 7.

As will be evident to the skilled person, the concentric positioning of the inlet and outlet tubes 10, 11 provides for a particularly compact arrangement having only a total of some 28 parts as compared to the 46 component parts in the manifold arrangement described in EP1422353B and similar manifold arrangements. As a consequence, the size of any water meter fitted over the upper housing 3 of the manifold 1 is not limited by the shape of the manifold itself, or the presence of parts of the manifold, there being effectively no horizontal separation between the inlet and outlet tubes 10. As a consequence, fluid flow is much easier, leading to lower frictional losses and hence greater hydrodynamic efficiency. The opening/closing levers 4 are also easy to see and to access by the occupant of e.g. a domestic dwelling house provided by mains water via the manifold 1. However, other types of manifold opening and closing valves may be used as part of or separate to the manifold 1 without deporting from the scope of the invention.

## Claims

1. A manifold (1) having a housing (2) including an inlet pipe connector (6) and an outlet pipe connector (7) between which is disposed in fluid communication therebetween a pair of concentric tubes (10,11), one connected at a first end to the inlet pipe connector (6) and the other connected at a first end to the outlet pipe connector (7), the second end of the concentric tubes being connected together in a housing (3) to permit fluid to flow from the inlet pipe to the outlet pipe, and valve means (12) to selectively shut-off or reduce the flow of fluid from the inlet pipe to the outlet pipe.

2. A manifold according to claim 1 wherein the valve means (12) comprises an apertured annular collar (13) and associated stop member (15), one for the or each aperture (14), the collar being rotatable between open and closed positions for controlling the flow of fluid.

3. A manifold according to claim 2 wherein rotation is directly via movement of an externally disposed lever (4).

4. A manifold according to claim 1 wherein the valve means is operated indirectly via an internally disposed gear mechanism.

5. A manifold according to claim 4 wherein the gear mechanism is a bevel gear mechanism.
